# EUROPEAN PATENT APPLICATION

(11) **EP 1 578 066 A1**
(43) Date of publication of application: **21.09.2005**
(21) Application number: 02790710.4
(22) Date of filing: 11.12.2002
(51) Int. Cl.: H04L 12/56, H04L 12/22

(54) **COMMUNICATION SYSTEM, COMMUNICATION TERMINAL COMPRISING VIR TUAL NETWORK SWITCH AND PORTABLE ELECTRONIC DEVICE COMPRISING ORGANISM RECOGNITION UNIT**

(71) Applicant: MITSUI & CO., LTD., Tokyo-to 100-0004 (JP)
(72) Inventor: OSHIMA, Shunichi, Chiyoda-ku, Tokyo 100-0004 (JP); SAITO, Hikaru, Chiyoda-ku, Tokyo 100-0004 (JP); NARAHARA, Tomoaki, Chiyoda-ku, Tokyo 100-0004 (JP); NAKAZATO, Shogo, Chiyoda-ku, Tokyo 100-0004 (JP); KIKKAWA, Haruhiro, c/o MITSUI BUSSAN DIGITAL CORP., Chiyoda-ku, Tokyo 101-0052 (JP); OGI, Takeshi, c/o MITSUI BUSSAN DIGITAL CORP., Chiyoda-ku, Tokyo 101-0052 (JP)
(74) Representative: Tranter, Andrew David
(86) International application number: PCT/JP2002/012943
(87) International publication number: WO 2004/054185

(57) **Abstract**

The communication terminal (2) of a communication system (1) comprises a virtual network switch (22) which can alter the destination of data being transmitted/received between the communication terminal (2) and a network (5) forcibly, wherein data is transmitted/received between the network (5) and the communication terminal (2) through a portable electronic device (3). Various functions, including a security function, can be supplemented by providing the function of software mounted on the portable electronic device (3) itself to the communication terminal (2). Even if a communication terminal connected directly with the network is not provided with such functions as VPN, firewall or virus check, high-safety communication can be ensured utilizing these security ensuring means mounted on the portable electronic device.

## Description

### Technical Field

The present invention pertains to a communication system comprising a communication terminal equipped with a network communication function and a portable electronic device capable of communicating with the communication terminal. Specifically, it pertains to a communication system capable of accessing various types of networks utilizing the communication terminal according to a communication security level preset in the portable electronic device.

### Background Art

Conventionally, it is generally the case that the software and its setting information, etc. needed when connecting a communication device to a public network such as the Internet, etc. for communication are all preloaded in the communication device, or are temporarily installed in the communication device, and the software is operated in the communication device. When ensuring security during communication too, the software for ensuring security is preloaded or temporarily installed in the communication device.

Such means of ensuring security during communication include VPN technology, which ensures security by utilizing some shared circuits as virtual dedicated circuits by using specially encrypted data to communicate with the other party; firewall technology, which prevents information exchange with unwanted others during communication; illegal virus removal technology, which checks whether or not malicious virus software is hidden in exchanged data and removes it, etc.

IP-VPN technology is widely used in VPN technology in order to prevent the risk of data being surreptitiously monitored or falsified by the many unknown strangers when communicating on the Internet. When IP-VPN technology is used, a network engineer installs prespecified VPN client software in the communication terminal of the client terminal that is to communicate and makes the necessary settings, thereby enabling connection with a specified VPN gateway device. When the client terminal communicates with a remote location, it has encrypted communication via the VPN gateway device, thereby making it possible to communicate safely with the remote location over the Internet.

Also, with firewall technology it is possible to do simple settings using software that is normally loaded in the OS of a communication terminal in advance. But when used in a company, etc., it is generally the case that firewall software is purchased and put in each communication terminal, or is set up at the entry to a network and used to protect the network itself. Both cases generally require settings be made in advance by an expert, so typically this is a protective method targeting a specific terminal or a specific network.

In addition, illegal virus removal technology is generally such that, like the aforesaid firewall technology, the virus removal software is put in a communication terminal in advance and the removal operation is performed periodically, or the virus removal software is put in a specific server device on a network and viruses are eliminated at the server when communicating via that device.

Conventional technology often assumes that when communication begins, all of the software needed has already been loaded into the network device. Nevertheless, there are a vast number of means for connecting to a network, which is typically the Internet in today's society, and individuals can freely utilize networks at their own volition without going through a network device that is pre-controlled by a network administrator. The current situation is that network control and information control in a limited area by a network administrator is in practice meaningless, and there is an urgent need to provide a network management means to the individual himself who is trying to access a network. Nowadays, Internet cafes and public wireless services are being provided; it is difficult to know to what extent the companies that operate and manage these circuits and terminals have taken protective measures for security, and it appears desirable that when someone is using a communication terminal, that person should provide his own protective measures.

Meanwhile, from the standpoint of the processing ability of the communication terminal itself, the following sort of difficulties arise. That is, the processing ability required of the software and hardware in a communication terminal is steadily increasing, year after year, and the processing ability of the communication terminal too is steadily rising along with this. Nevertheless, even though the processing ability of the communication terminal is increasing, when a single communication terminal does all sorts of tasks, this limits the communication terminal's ability to execute applications that it is supposed to execute for a user, and sometimes there are tasks related to communication that must be executed.

The amount of information [transmitted] has increased as networks have become faster, and there is a tendency for problems created by this to occur more frequently. Also, from the user's standpoint, the problem created by such delays in some tasks becomes the reason necessitating purchase of a new communication terminal, so efficiency is bad. Also, in the case of a user who communicates using many communication terminals, the state of the communication environment becomes dependent on the abilities of individual terminals, so network quality is unavoidably unstable.

When communicating using individual security technologies, such as VPN technology, for example, one must assume that VPN client software has been installed in the client terminal and that the necessary communication settings have already been made. These communication settings are usually very detailed network technology, and are difficult to set unless one knows all of the setting information needed by the destination VPN gateway.

As a result, terminals using VPN communication are limited to information terminals that a company has preset and assigned to an employee. Unless an employee carries around this information terminal, it is impossible in practice to communicate with company resources using a VPN connection. The only solutions for this are for the employee to make a low-speed dial-up connection using a public circuit, or to do a limited mail access using a service provided by a third-party Internet service provider, wireless telephone carrier, etc. that is not affected by the company administrator's security management However, such methods are basically risky for the network administrator and not desirable.

Also, the various types of communication setting information set in VPN client software can easily be accessed by a third party other than the communication terminal owner if it passes through a simple security check. Therefore a malicious third party could intercept the setting information with relative ease from the terminal of a careless client terminal owner, set another terminal, and connect with the VPN gateway, and thereby be able to access the company's confidential data,

Furthermore, when utilizing firewalls or virus removal software, with conventional technology there are limits to the networks and communication terminals on which they can be used. The current situation is that there is no means for safely using the ubiquitous Internet without restricting the communication terminal itself that is actually communicating.

### Disclosure of the Invention

The object of the present invention, in light of the aforesaid points, is to provide a communication system capable of communicating at the desired security level using a communication terminal without the assumption that all of the necessary software has been preloaded in the communication terminal equipped with a communication function, and to provide a communication terminal and portable electronic device for use in this communication system.

In order to achieve the aforesaid object, the inventive communication system is characterized as comprising:
A communication terminal comprising a network connection means, and
A portable electronic device capable of communicating with the communication terminal;
The aforesaid communication terminal comprises a virtual network switch that can forcibly alter the destination of data transmitted to and from a network connected via the aforesaid network connection means;
The aforesaid portable electronic device comprises a security ensuring means for ensuring communication security to and from the aforesaid network using the aforesaid communication terminal; and
The aforesaid communication terminal transmits data to and from the aforesaid network via the aforesaid virtual network switch and the aforesaid portable electronic device's aforesaid security ensuring means.

The aforesaid security ensuring means can include a VPN means, virus removal means, and firewall means.

Also, the aforesaid virtual network switch can be a virtual IP switch incorporated into the network layer in the OSI 7-layer model in TCP/IP, the standard Internet protocol. This virtual IP switch is characterized in that it transfers packets received from the aforesaid network to a higher transport layer or to the aforesaid portable electronic device according to preset parameters, and returns packets from the portable electronic device to a higher transport layer or to the aforesaid network that was the transmission source according to preset parameters.

Next, the inventive communication system, in addition to the aforesaid constitution, is characterized in that checking the security of the aforesaid communication terminal's storage medium and applications is performed by the aforesaid portable electronic device's aforesaid security ensuring means via the aforesaid virtual network switch.

Also, the aforesaid portable electronic device preferably comprises an organism recognition device such as a fingerprint sensor, etc., an organism information storage unit in which organism information is prestored and held, and an authentication means for permitting access to the aforesaid network via the aforesaid communication terminal by comparing organism information read by the aforesaid organism recognition device against organism information stored in the aforesaid organism information storage unit.

Meanwhile, the invention communication system is characterized as comprising:
A communication terminal comprising a network connection means, and
A portable electronic device capable of communicating with the communication terminal;
The aforesaid communication, terminal comprises a security ensuring means for ensuring communication with a network; and
The aforesaid portable electronic device preferably comprises a communication setting information storage unit that stores and holds communication setting information needed for communication with the aforesaid network via the aforesaid security ensuring means, an organism recognition device such as a fingerprint sensor, etc., an organism information storage unit in which organism information is prestored and held, and an authentication means for comparing organism information read by the aforesaid organism recognition device against organism information stored in the aforesaid organism information storage unit.

The inventive communication system, constituted in this manner, is not limited by the type of software loaded in a communication terminal having a network communication function; the communication terminal is supplied with the functions of the software loaded in the portable electronic device itself, and various types of functions such as security functions, etc, can be supplemented. Therefore, even if a communication terminal directly connected to a network is not equipped with functions such as VPN, firewall, virus check, etc., high safety communication is possible by using these security ensuring means loaded in the portable electronic device.

Also, the portable electronic device itself does not have an intrinsic physical network connection means, but when it is connected to a separate communication terminal directly connected to a network the portable electronic device is virtually present between the network and the communication terminal due to the communication terminal's virtual network switch. Therefore the communication terminal and the network can communicate utilizing the security ensuring means loaded in the portable electronic device.

In addition, when the portable electronic device includes an organism recognition device, authenticating the person using the organism recognition device makes it possible to establish a connection to a specified network on the Internet through a communication terminal connected to the network by an intrinsic physical connection (such as a PC, wireless phone, etc.) to which the device is connected.

### Brief Description of the Drawings

FIG. 1 is a block diagram showing the structure of one example of a communication system employing the present invention.
FIG. 2 is a block diagram showing the structure of another example of a communication system employing the present invention.
FIG. 3 is a block diagram showing the structure of yet another example of a communication system employing the present invention.
FIG. 4 is a diagram explaining an example of the virtual network switch provided in the communication terminal in the communication systems of FIG. 1 through FIG. 3.
FIG. 5 is a diagram explaining an example of the virtual network switch provided in the communication terminal in the communication systems of FIG. 1 through FIG. 3.
FIG. 6 is a block diagram showing the structure of one example of a communication system according to another arrangement of the present invention.
FIG. 7 is a block diagram showing the structure of a variation of the FIG. 6 communication system.
FIG. 8 is a block diagram showing the structure of another variation of the FIG. 6 communication system.

### Preferred Embodiments for Practicing the Invention

Below, embodiments of a communication system employing the present invention shall be explained with reference to drawings.

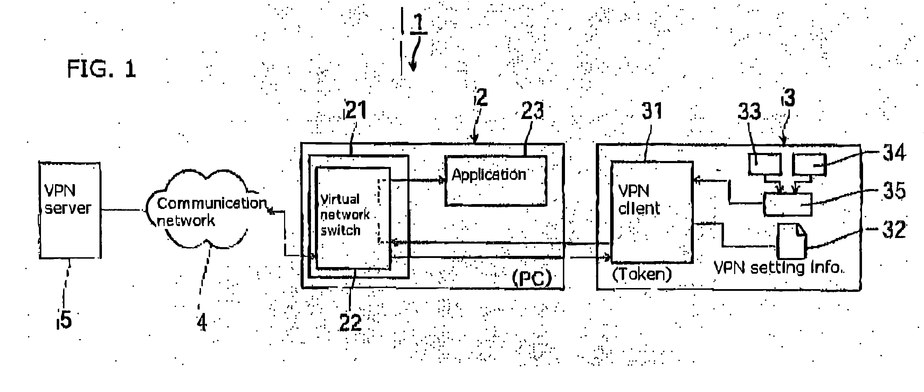

FIG. 1 is a block diagram showing the structure of one example of a communication system employing the present invention. This example's communication system 1 has a communication terminal 2 equipped with a network connection means 21 such as a PC, portable telephone, etc., and a portable electronic device 3 (hereinafter "token") capable of communicating with the communication terminal 2. It can connect to a designated network 5 via a communication network 4 such as the Internet.

The communication terminal 2 has a virtual network switch 22 that can forcibly alter the destination of data transmitted to and from the network 5 to which it is connected via the network connection means 21. Using the virtual network switch 22, data sent from the network 5 to the communication terminal 2 is transferred to the portable electronic device 3, passes through the portable electronic device 3, and is returned to the communication terminal 2's virtual network switch 22 again, and then is processed by the communication terminal 2's application 23, etc. Data sent from the communication terminal 2 to the network 5 also goes from the virtual network switch 22 to the portable electronic device 3 and passes through the virtual network switch 22 again and is sent toward the destination network 5. Thus the portable electronic device 3 is physically connected to the communication terminal 2, but it functions as if it were interposed between the network 5 and the communication terminal 2 due to the virtual network switch 22.

The portable electronic device 3 has a security ensuring means for ensuring communication security with the network 5 using the communication terminal 2. In this example, it has a VPN client function 31 and a storage unit 32 storing VPN setting information.

Therefore, in this example's communication system 1, after the portable electronic device 3 is connected to the communication terminal 2 and they can communicate with one another, when communication with the network 5 (VPN server) starts using the communication terminal 2's communication connection means 21, the virtual network switch 22 functions. As a result, communication utilizing the portable electronic device 3's VPN is formed between the network 5 and the communication terminal 3 [sic].

Here, it is preferred that the portable electronic device 3 have an organism recognition device 33 such as a fingerprint sensor, etc., an organism information storage unit 34 in which organism information is prestored and held, and an authentication unit 35 for authenticating by comparing organism information read by the organism recognition device 33 against organism information stored in the organism information storage unit 34.

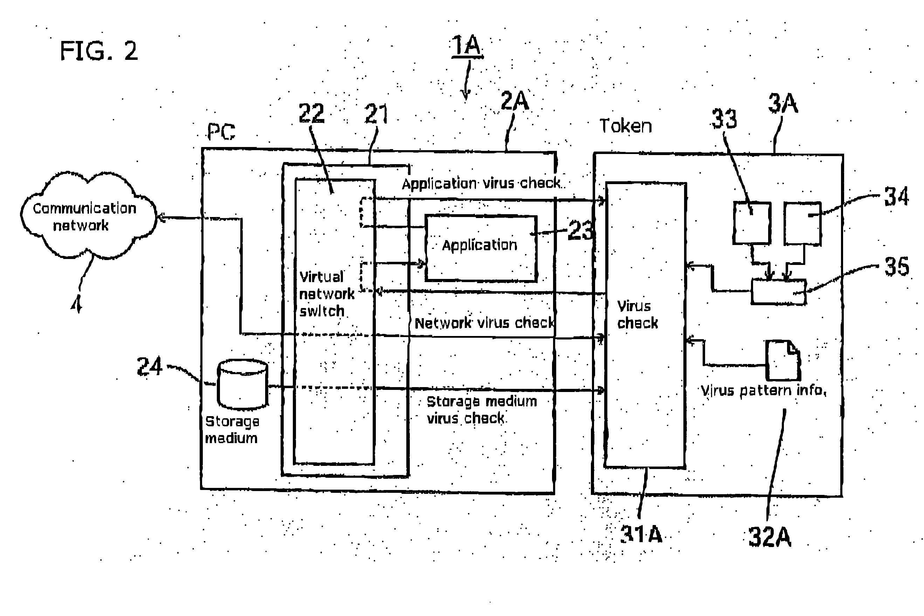

FIG. 2 is a block diagram showing the structure of another example of a communication system employing the present invention. The communication system 1A shown in this drawing is constituted so that management of communication terminal 2A's media (hard disk, removable disk, external memory, etc.) and program execution management are handled from the portable electronic device 3A side utilizing the function of the virtual network switch 22.

The communication terminal 2A's virtual network switch 22 has a function for accessing the communication terminal 2A's storage media (hard disk, removable disk etc.). The portable electronic device 3A is provided with a virus check function 31A and a virus pattern information storage unit 32A as security ensuring means.

After the portable electronic device 3 A connects to the communication terminal 2A and the person is authenticated, the virus check function 31A issues a command packet to the communication terminal 2A's virtual network switch 22 for accessing the storage medium 24 and application 23. Thus a security check of the communication terminal 2A's various media can be conducted from the portable electronic device 3A side.

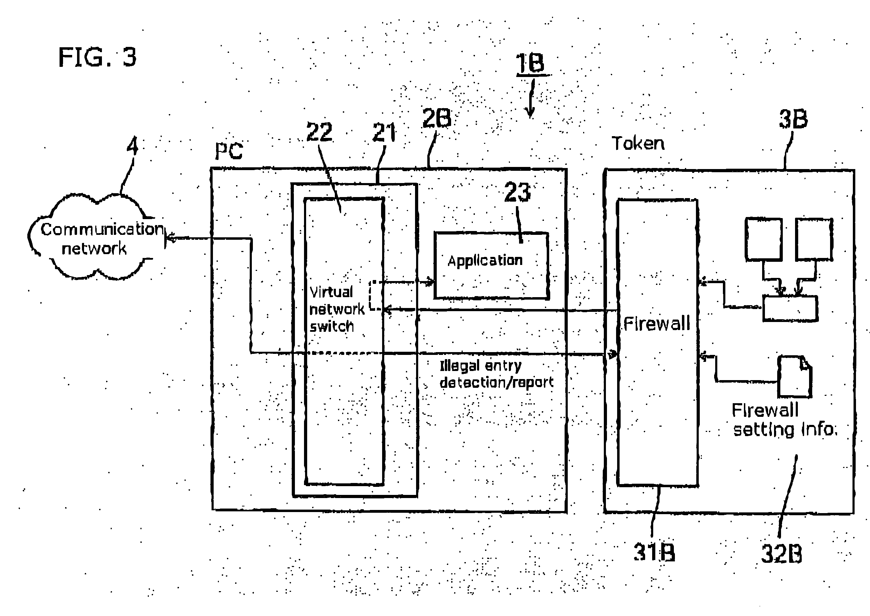

FIG. 3 is a block diagram showing the structure of yet another example of a communication system employing the present invention. The communication system 1B shown in this drawing is constituted so that a firewall function 31B and a storage unit 32B for its firewall setting information are provided in a portable electronic device 3B as security ensuring means. In this communication system 1B too the portable electronic device 3B is virtually present between the communication network 4 and the communication terminal 2B due to the function of the virtual network switch 22, and detects and reports illegal entry from the outside, so safe communication is possible.

Here, the virtual network switch 22 provided in the communication terminal 2 (2A, 2B) can be a virtual IP switch incorporated into the network layer in the OSI 7-layer model in TCP/IP, the standard Internet protocol.

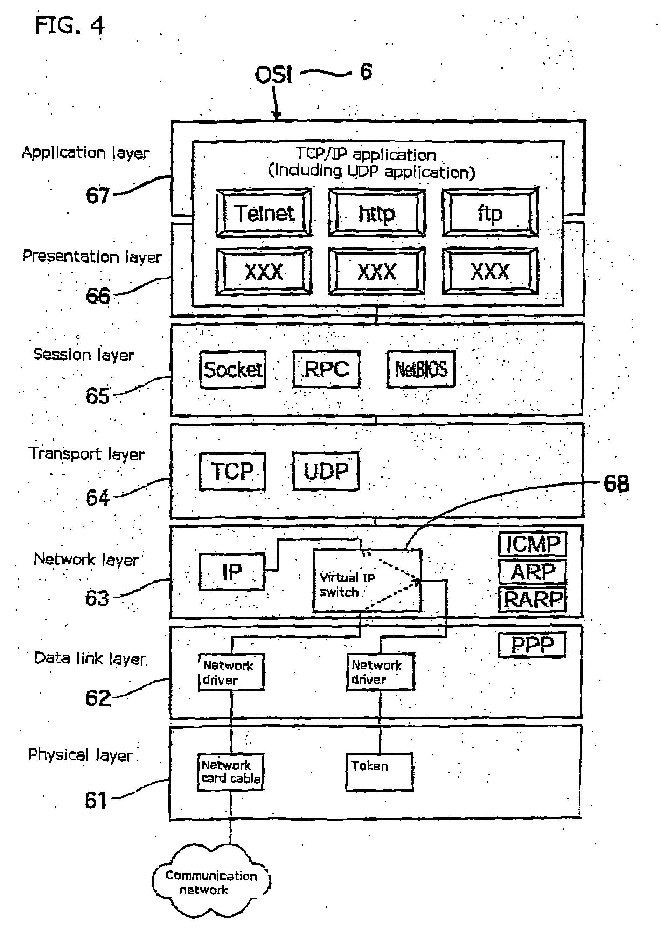

FIG. 4 is a diagram explaining the OSI 7-layer model. A virtual IP switch 68 is installed in a network layer 63 in a 7-layer model 6. The virtual IP switch 62 [sic] switches the packet destination to a higher transport layer 63 [sic] or to the portable electronic device 3 (3A, 3B), another network device. No change to the various other layers (61, 62, 64~67) is necessary.

The virtual IP switch 68 has a different mechanism than the usual layer 3 switch; when a packet is transferred to the portable electronic device 3 (3A, 3B), it is necessary to maintain the original packet's information without loss, so the original packet needs to be encapsulated as a packet for transfer, The encapsulated packet is restored to the original packet at the destination device 3 (3A, 3B), is processed by an application at the device, and the packet is passed to the virtual IP switch 68 again.

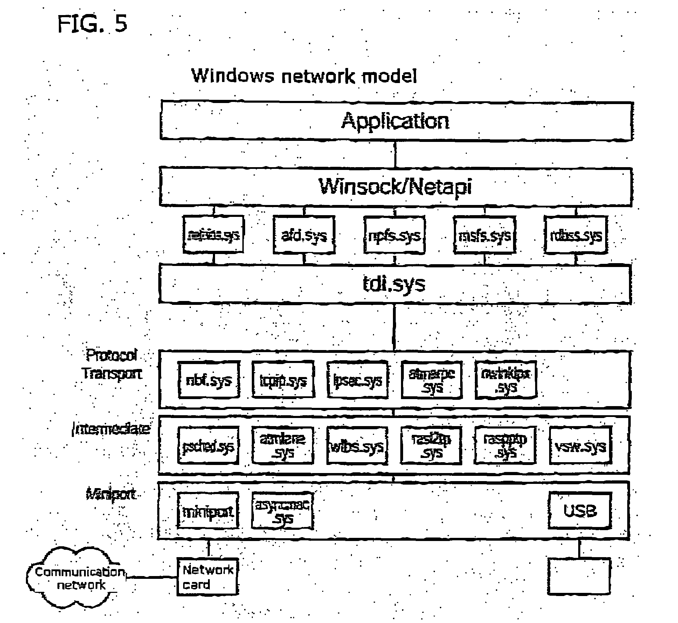

Furthermore, FIG. 5 is a drawing explaining the case when this 7-layer model is applied to a Windows© network model. In this drawing, "vsw.sys" in the intermediate layer is the virtual network switch. This software decides whether to transfer a packet to one of the higher protocols in the portable electronic device 3 (3A, 3B) and communication terminal 2 (2A, 2B). The intermediate layer is a layer commonly used in the Windows network architecture; packet filtering software that utilizes this layer is commercially available.

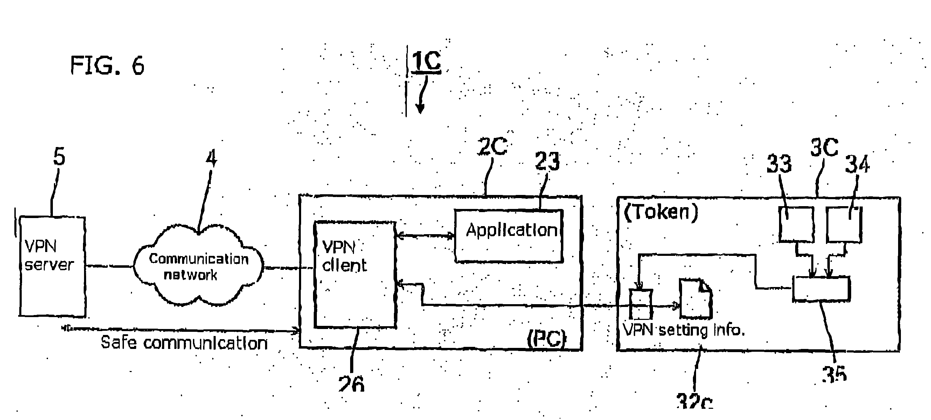

Next, FIG. 6 is a block diagram showing the structure of a communication system according to the present invention. The communication system 1C has a communication terminal 2C and a portable electronic device (token) 3C. The communication terminal 2C has a network communication means 21A and a VPN client function 26. Meanwhile, the portable electronic device 3C has a storage unit 32C storing the VPN setting information needed for communication using the VPN client function 26. Also, the portable electronic device 3C has the organism recognition device 33 such as a fingerprint sensor, etc., the organism information storage unit 34 in which organism information is prestored and held, and the authentication unit 35 for authenticating by comparing organism information read by the organism recognition device 33 against organism information stored in the organism information storage unit 34.

The communication system 1C with this constitution puts the program that processes security on the communication terminal 2C side, and keeps the information necessary for operating it on the token 3C side; they work together and execute processing according to the result of recognition by the organism recognition device 33.

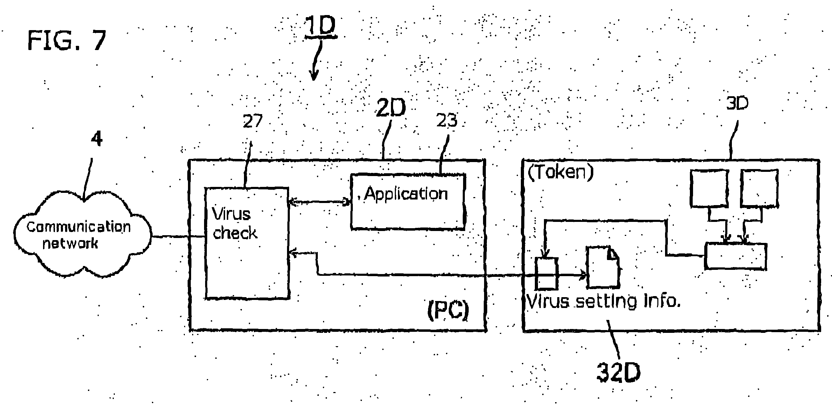

FIG. 7 is a block diagram showing the structure of a communication system with a virus check function employing the present invention. In this communication system 1D a virus check function (software) 27 is put on the communication terminal 2D side, and the virus setting information needed for executing it is held in a portable electronic device 3D's storage unit 32D. When authenticated by the organism recognition device 33, the two work together and perform a virus check, and safe communication is possible.

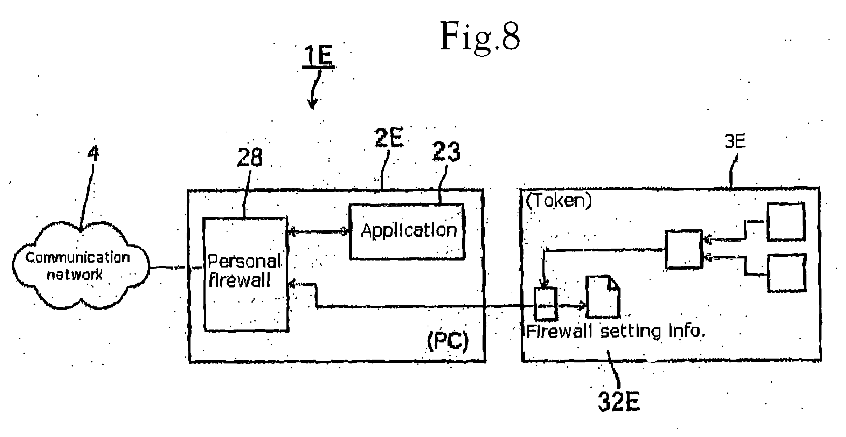

Next, FIG. 8 is a block diagram showing the structure of a communication system with a firewall function employing the present invention. In this communication system 1E a personal firewall function 28 is put on the communication terminal 2E side, and the portable electronic device 3E has a storage unit 32E storing firewall setting information therefor. In this case too, when a person is authenticated by the organism recognition device 33, the two work together and safe communication is possible.

### Industrial Applicability

As explained above, the inventive communication system and the communication terminal and portable electronic device used in it provide the following sort of effects.
(1) By carrying around a portable electronic device with an organism recognition device according to the present invention, the user becomes able to use any communication terminal having a network communication function anywhere to communicate safely with a required resource on the Internet while performing a VPN connection or security check. Therefore it is possible to communicate using the best useable communication means while maintaining one's own security policy at the necessary location without being limited to the security set by the circuit provider.
(2) It is not necessary to keep information that threatens security in the communication terminal; VPN connection and personal firewall settings, virus check settings, and other communication setting information that pertains to security is encrypted and kept in the portable electronic device, so the risk of setting information leaking to an outside third party is greatly reduced.
(3) The load on communication terminals occasioned by security checks is reduced, and one can expect improvement in the performance of other processing.
(4) In connection with (2) above, in ordinary use it is essentially unnecessary for the user himself to become involved in operating VPN client software, etc. Also, it becomes possible to make accessing the setting information a restricted task using encryption means that only a network administrator can use, thereby greatly reducing the risk of someone carelessly altering the client software's setting information. As a result, one can expect the result of reducing a network administrator's work and a company's administrative costs.
(5) An individual can carry the inventive portable electronic device as an ID, and can save VPN software that works with that ID, a personal firewall, virus check software, and connection-related communication setting information. By doing so, the company that loaned the device does not have to do tasks such as installing VPN client software in a newly used communication device or making settings for VPN connection when an employee/user is moved to a different post or when replacing communication devices such as the PC that is being used. All that is needed is to ensure a communication interface with the relevant token, so the network administrator's work is greatly reduced.
(6) In connection with the aforesaid ID, by linking the inventive scheme with software such as security software, etc. it becomes possible to authenticate a person using an organism recognition device, check license information by issuing the ID to a network server after authentication, provide an update function for software installed in the token after the license check, etc. This can be reliably done vis-à-vis the person carrying the device, not vis-à-vis the terminal.
(7) If the specifications of a communication terminal are such that it cannot provide the application or communication software functions that are being used, instead of buying a new communication terminal it is possible to switch only the required communication processing ability to another distributed processing device and to cany around this sort of distributed processing device; therefore one can always have a stable communication environment without carrying around the terminal itself.

## Claims

1. A communication system comprising:
A communication terminal comprising a network connection means, and
A portable electronic device capable of communicating with the communication terminal;
Said communication terminal comprises a virtual network switch that can forcibly alter the destination of data transmitted to and from a network connected via said network connection means;
Said portable electronic device comprises a security ensuring means for ensuring communication security to and from said network using said communication terminal; and
Said communication terminal transmits data to and from said network via said virtual network switch and said portable electronic device's said security ensuring means.

2. A communication system according to claim 1, wherein said security ensuring means includes at least one of an encrypted data transmission means, virus removal means, and firewall means.

3. A communication system according to claim 1 or claim 2, wherein said virtual network switch is a virtual IP switch incorporated into the network layer in the OSI 7-layer model in TCP/IP, the standard Internet protocol, and
The virtual IP switch transfers packets received from said network to a higher transport layer or to said portable electronic device according to preset parameters, and returns packets from the portable electronic device to a higher transport layer or to said network that was the transmission source according to preset parameters.

4. A communication system according to claim 1, claim 2, or claim 3, wherein checking the security of said communication terminal's storage medium and applications is performed by said portable electronic device's said security ensuring means via said virtual network switch.

5. A communication according to any of claims 1 through 4, wherein said portable electronic device comprises an organism recognition device such as a fingerprint sensor, etc., an organism information storage unit in which organism information is prestored and held, and an authentication means for permitting access to said network via said communication terminal by comparing organism information read by said organism recognition device against organism information stored in said organism information storage unit.

6. Said communication terminal comprising said virtual network switch as described in any of claims 1 through 5.

7. Said portable electronic device as described in any of claims 1 through 5.

8. A communication system comprising:
A communication terminal comprising a network connection means, and
A portable electronic device capable of communicating with the communication terminal;
Said communication terminal comprises a security ensuring means for ensuring communication security to and from a network; and
Said portable electronic device comprises a communication setting information storage unit that stores and holds communication setting information needed for communication with said network via said security ensuring means, an organism recognition device such as a fingerprint sensor, etc., an organism information storage unit in which organism information is prestored and held, and an authentication means for comparing organism information read by said organism recognition device against organism information stored in said organism information storage unit.

9. A communication system according to claim 8, wherein said security ensuring means includes at least one of an encrypted data transmission means, virus removal means, and firewall means.

10. Said portable electronic device as described in claim 8 or claim 9.
